# EUROPÄISCHE PATENTSCHRIFT

(11) **EP 1 724 508 B1**
(45) Veröffentlichungstag und Bekanntmachung des Hinweises auf die Patenterteilung: **29.04.2009**
(21) Anmeldenummer: 06010137.5
(22) Anmeldetag: 17.05.2006
(51) Int. Cl.: F16L 11/11, F16L 9/00, F24F 13/02, F16L 11/20, B29C 67/00

(54) **Rohr**
Pipe
Tuyau

(30) Priorität: 19.05.2005 DE 202005007835 U
(43) Veröffentlichungstag der Anmeldung: 22.11.2006
(73) Patentinhaber: Zehnder Verkaufs- und Verwaltungs AG, 5722 Gränichen (CH)
(72) Erfinder: Kriesi, Ruedi, Dr., 8820 Wädenswil (CH)
(74) Vertreter: Stenger, Watzke & Ring

(56) Entgegenhaltungen:
- DE-A1- 2 637 995
- DE-A1- 2 944 984
- DE-C2- 19 817 109
- DE-U1- 20 021 348
- DE-U1- 20 205 625
- DE-U1-6202005 005 05

## Beschreibung

Die Erfindung betrifft ein Rohr, insbesondere für die Luftführung in Be- und/oder Entlüftungseinrichtungen von Gebäuden oder Teilen hiervon, mit den Merkmalen nach dem Oberbegriff des Anspruchs 1.

Rohre der gattungsgemäßen Art sind aus dem Stand der Technik an sich bekannt, so zum Beispiel aus der DE 200 21 348 U1, die ein Kanalrohr zum Transportieren von Luft, insbesondere für die Anwendung in Heizungs-, Lüftungs- und Klimatisierungsanlagen offenbart. Die vorbekannten Rohre verfügen über eine nach Art einer Ziehharmonika gewellt ausgebildete äußere Rohrwand, was es ermöglicht, die Rohre flexibel zu biegen. Aus diesem Grunde eignen sich die vorbekannten Rohre insbesondere als Durchziehkanäle für elektrische Kabel und dergleichen, denn sie können montagefreundlich verlegt werden.

Aus dem Stand der Technik sind ferner mehrschichtige Kunststoffwellrohre bekannt, die über eine äußere Wellrohrwand und eine damit verbundene Innenrohrwand verfügen, wobei die Innenoberfläche der Innenrohrwand im wesentlichen glatt ausgebildet ist. Ein solches Rohr ist beispielsweise aus der DE 202 05 625 U1 bekannt. Da die Innenoberfläche der inneren Rohrwand im wesentlichen glatt ausgebildet ist, eignen sich diese vorbekannten Rohre für die druckverlustarme Hindurchführung von gasförmigen, flüssigen oder feinkörnigen Medien, insbesondere für die Luftführung in Be- und/oder Entlüftungseinrichtungen von Gebäuden oder Teilen hiervon. Bedingt durch die glatt ausgebildete Innenoberfläche der inneren Rohrwand können störende Turbulenzen im wesentlichen vermieden werden, was nicht nur eine vergleichsweise geräuscharme Medienführung ermöglicht, auch sind ungewollte Schmutzablagerungen weitestgehend ausgeschlossen.

Obgleich sich die aus dem Stand der Technik bekannten Rohre dank der vorgenannten Vorteile in der Praxis bewährt haben, sind sie nicht frei von Nachteilen, so zum Beispiel hinsichtlich einer zu geringen Biegesteifigkeit.

Die **Aufgabe** der Erfindung ist es daher, ein gattungsgemäßes Rohr weiterzubilden und insbesondere hinsichtlich seiner Biegesteifigkeit zu verbessern.

Zur **Lösung** dieser Aufgabe wird mit der Erfindung ein Rohr mit den Merkmalen nach Anspruch 1 vorgeschlagen.

Das im Querschnitt im wesentlichen rechteckförmig oder oval ausgebildete Rohr verfügt im Vergleich zu einem im Querschnitt kreisförmig ausgebildeten Rohr bei gleich großem Strömungsquerschnitt über deutlich verringerte Außenabmessungen des Rohrquerschnitts in Richtung einer der beiden Raumquerschnittskoordinaten. Bei gleich großem Strömungsquerschnitt mag zwar ein im Querschnitt rechteckförmig oder oval ausgebildetes Rohr im Querschnitt breiter sein als ein im Querschnitt kreisförmig ausgebildetes Rohr, doch fällt die Querschnittshöhe eines solchen Rohres sehr viel geringer aus, was es in vorteilhafter Weise erlaubt, das so ausgebildete Rohr in knapp bemessenen Verlegeräumen, das heißt in knapp bemessenen Unterlagsböden, Wandaufdoppelungen und dergleichen zu verlegen. Der Verlege- und/oder Montageaufwand ist bei dem erfindungsgemäßen Rohr mithin deutlich niedriger als bei den aus dem Stand der Technik bekannten, im Querschnitt kreisförmigen Rohren.

Verlegeräume, die bei gegebenem Strömungsquerschnitt für im Querschnitt kreisförmig ausgebildete Rohre zu klein sind, können in vorteilhafter Weise unter Zuhilfenahme des erfindungsgemäßen Rohres genutzt werden.

Das erfindungsgemäße Rohr ist doppelwandig ausgebildet. Es besteht aus einer äußeren Rohrwand einerseits sowie einer inneren Rohrwand andererseits. Die äußere Rohrwand ist nach Art einer Ziehharmonika gewellt ausgebildet und verfügt über sich in Form von Wellenbergen nach außen erstreckende Ausformungen, die ein einfaches Verbiegen des Rohres ermöglichen. Zwischen zwei Wellenbergen befindet sich jeweils ein Wellental, wobei sich eine Mehrzahl von Wellenbergen und Wellentälern in Längsrichtung des Rohres einander abwechseln. Die innere Rohrwand ist mit der äußeren Rohrwand verbunden, so daß eine relative Verschiebung zwischen äußerer Rohrwand einerseits und innerer Rohrwand andererseits unterbunden ist. Zwecks Verbindung von äußerer Rohrwand und innerer Rohrwand kann die innere Rohrwand mit der äußeren Rohrwand verschweißt, verklebt oder sonst wie verbunden sein.

Die Innenoberfläche der inneren Rohrwand ist im wesentlichen glatt ausgebildet. Dabei ist im Sinne der Erfindung unter "im wesentlichen glatt ausgebildet" zu verstehen, daß ein Medium, beispielsweise Luft, möglichst druckverlustarm durch das Rohr hindurchgeführt werden kann und die Ausbildung störender Turbulenzen weitestgehend unterbunden ist. Dies schließt eine Ausbildung der inneren Rohrwand mit ein, wonach die innere Rohrwand in Längsrichtung des Rohres leicht gewellt ausgebildet ist. Diese leicht gewellte Ausbildung der inneren Rohrwand ist erforderlich, damit eine Verbiegung des Rohres, welche durch die Ausgestaltung der äußeren Rohrwand ermöglicht wird, durch die innere Rohrwand nicht behindert wird. Grundsätzlich gilt aber, daß die innere Rohrwand so glatt wie möglich auszubilden ist, d. h. die erforderliche Wellung der inneren Rohrwand so gering wie möglich auszubilden ist. Dabei ist auf der einen Seite zu beachten, daß die Wellen der inneren Rohrwand derart bemessen sind, daß eine Verbiegung des Rohres durch die innere Rohrwand nicht behindert ist. Auf der anderen Seite sollte die Innenoberfläche des Innenrohres bei nicht verbogenem Rohr möglichst glatt ausgebildet sein, wobei es zur Verbesserung der Biegefähigkeit des Rohres bevorzugt ist, daß die innere Rohrwand im nicht verbogenen Zustand des Rohres über eine leicht ausgebildete Wellung verfügt, wobei die Wellenberge der inneren Rohrwand in die Wellenberge der äußeren Rohrwand hineinragen. Eine solche Ausgestaltung stellt sicher, daß sich die im Zuge einer Biegung eines Rohres vergrößernden Wellenberge der inneren Rohrwand lagersicher in die jeweils zugehörigen Wellenberge der äußeren Rohrwand erstrecken. Ungewünschte Einfaltungen des Innenrohres können so vermieden werden.

Gemäß einem weiteren Merkmal der Erfindung besteht die Rohrwand aus einem biegeelastischen Material. So kann die äußere und/oder die innere Rohrwand beispielsweise aus Kunststoff, insbesondere einem thermoplastischen Kunststoff bestehen.

Gemäß einem weiteren Merkmal der Erfindung ist vorgesehen, daß die äußere Rohrwand mit Bezug auf den Rohrquerschnitt umlaufende Rillen aufweist. Dabei ist vorzugsweise im Bereich eines jeden Wellenberges und/oder im Bereich eines jeden Wellentals jeweils eine umlaufende Rille in der äußeren Rohrwand ausgebildet, wobei die Wandstärke der äußeren Rohrwand im Bereich einer jeden umlaufenden Rille um 20 bis 80 %, vorzugsweise um 40 bis 60 % reduziert ist. Die so ausgebildeten Rillen schaffen Sollbiegestellen, die ein erleichtertes Verbiegen des Rohres ermöglichen. Insbesondere mit Blick auf den im wesentlichen rechteckförmig oder oval ausgebildeten Strömungsquerschnitt ist diese Ausgestaltung von Vorteil. So verringern die Rillen den Widerstand der äußeren Rohrwand gegen eine Verkürzung, wie sie für die äußere Rohrwand auf der Bogeninnenseite im Falle einer Verbiegung notwendig ist. Gleichzeitig wird aber durch diese Art der Schwächung der äußeren Rohrwand die Biegesteifigkeit der äußeren Rohrwand in Querrichtung nicht vermindert, so daß sich die äußere Rohrwand beim Verbiegen des Rohres nicht ungewünscht verwirft und auch der Widerstand des Rohres gegen äußere Kräfte, beispielsweise durch eine darauf tretende Person, nicht verschlechtert wird.

Das erfindungsgemäße Rohr läßt sich dadurch herstellen, daß zunächst separat voneinander sowohl ein im Strömungsquerschnitt rechteckförmiges oder ovales Außenrohr als auch ein im Strömungsquerschnitt rechteckförmiges oder ovales Innenrohr hergestellt werden, die dann zur Ausbildung des doppelwandigen Rohres ineinandergesteckt und miteinander verbunden werden. In der Praxis hat sich dieses Herstellungsverfahren insofern als nachteilig herausgestellt, als daß es ob der benötigten Werkzeuge für den Fertigungsprozeß aufwendig und damit teuer ist. Um ein einfaches und insbesondere kostengünstiges Herstellungsverfahren zu erreichen, wird vorgeschlagen, daß zunächst in einem ersten Verfahrensschritt ein doppelwandiges und in seiner Ausgangsform kreisförmiges Rohr hergestellt wird. Zu diesem Zweck werden ein im Querschnitt kreisförmiges Außenrohr, das heißt die äußere Rohrwand und ein im Querschnitt kreisförmiges Innenrohr, das heißt die innere Rohrwand ausgebildet. Diese werden alsdann zu einem doppelwandigen, in seiner Ausgangsform im Querschnitt zunächst noch kreisförmigen Rohr ineinandergeführt und miteinander verbunden. Das Ergebnis ist ein doppelwandiges, mit einer nach Art einer Ziehharmonika gewellt ausgebildeten äußeren Rohrwand und einer mit der äußeren Rohrwand verbundenen inneren Rohrwand, wobei die Innenoberfläche der inneren Rohrwand im wesentlichen glatt ausgebildet ist.

Das auf diese Weise hergestellte Rundrohr wird in einem zweiten Verfahrensschritt verformt, und zwar derart, daß ein Rohr mit einer von der Kreisform abweichenden Querschnittsform, das heißt beispielsweise einer rechteckförmigen oder ovalen Querschnittsform entsteht. Zu diesem Zweck wird das in seiner Ausgangsform im Querschnitt zunächst noch kreisförmige Rohr erwärmt und mittels eines Preßwerkzeuges verformt, das heißt durch Pressen umgeformt. Dabei ist es grundsätzlich denkbar, daß das in seiner Ausgangsform zunächst noch im Querschnitt kreisförmige Rohr erwärmt und im Anschluß an seine Erwärmung in das Preßwerkzeug zwecks Verformung eingebracht wird. Bevorzugt ist allerdings eine Verfahrensdurchführung, bei der die Verformung des Rohres unter gleichzeitiger Wärmezufuhr erfolgt, das heißt das zu verformende Rohr wird in das Preßwerkzeug eingebracht und unter Wärmezufuhr verformt.

Als Material sowohl für die äußere Rohrwand als auch für innere Rohrwand kommt insbesondere ein Kunststoff, vorzugsweise ein thermoplastischer Kunststoff in Frage. Je nach Dimensionierung des Rohres, das heißt je nach gegebenen geometrischen Abmessungen, Materialzusammensetzung und dergleichen erfolgt eine Erwärmung auf 100°C bis 150°C, vorzugsweise auf 110°C bis 140°C. In der Praxis hat sich insbesondere eine Temperatur von 120°C als besonders günstig herausgestellt.

Zur endfertigen Herstellung der gewünschten Querschnittsform verbleibt das zu verformende und in seiner Ausgangsform im Querschnitt zunächst noch kreisförmige Rohr in Abhängigkeit der Rohrdimensionen einige Minuten im Preßwerkzeug. Verformenszeiten von 1 bis 10 Minuten, vorzugsweise von 2 bis 7 Minuten haben sich als günstig erwiesen.

Der besondere Vorteil dieses Verfahrens liegt in der einfachen und wirtschaftlichen Durchführbarkeit. Es bedarf insbesondere keiner teuren Herstellungsmaschinen. In an sich bekannter Weise wird zunächst ein im Querschnitt kreisförmiges Rohr hergestellt. Dieses wird dann zur Erzielung der eigentlich gewünschten endfertigen Querschnittsform unter Wärmezufuhr umgeformt, wofür es lediglich eines einfach zu bedienenden und in der Beschaffung, Wartung und Anwendung vergleichsweise preisgünstigen Preßwerkzeuges bedarf. Insofern erweist sich das erfindungsgemäße Verfahren als besonders wirtschaftlich.

Gemäß einer alternativen Verfahrensdurchführung werden die äußere und die innere Rohrwand des in seiner Ausgangsform im Querschnitt zunächst noch kreisförmigen Rohres lose ineinander gesteckt, das heißt nicht miteinander verbunden. Im Zuge der nachfolgenden Verformung unter Wärmezufuhr wird nicht nur die gewünschte Querschnittsform ausgebildet, sondern auch ein Verbinden von äußerer Rohrwand und innerer Rohrwand durch Verschweißen erzielt. Zu diesem Zweck erfolgt in vorgebbaren Teilbereichen des in seiner Ausgangsform im Querschnitt zunächst noch kreisförmigen Rohres ein derart hoher Wärmeeintrag, so daß sowohl die äußere als auch die innere Rohrwand in diesen Teilbereichen auf- bzw. anschmelzen und sich stoffschlüssig miteinander verbinden. Gemäß dieser alternativen Ausführungsform erfolgt in einem Verfahrensschritt also sowohl die Umformung des Rohres in die gewünschte Querschnittsform als auch die Verbindung von äußerer und innerer Rohrwand.

Das Ergebnis der Verfahrensdurchführung ist ein Rohr mit einer von der Kreisform abweichenden Querschnittsform, beispielsweise einer rechteckförmigen oder ovalen Querschnittsform. Diese bleibt dank der thermisch durchgeführten Umformung dauerhaft erhalten, womit sich das Verfahren insbesondere dazu eignet, ein erfindungsgemäßes Rohr herzustellen.

Weitere Merkmale und Vorteile der Erfindung ergeben sich aus der nachfolgenden Beschreibung anhand der Figuren. Dabei zeigen:
- Fig. 1: in schematischer, geschnittener Seitenansicht ein erfindungsgemäßes Rohr;

- Fig. 2: das erfindungsgemäße Rohr nach Fig. 1 entlang der Schnittlinie II-II gemäß Fig. 1;
- Fig. 3: in schematischer Seitenansicht ein erfindungsgemäßes Rohr in verbogener Stellung;
- Fig. 4: in einem Detailausschnitt in schematischer Darstellung die äußere und die innere Rohrwand des erfindungsgemäßen Rohres in nicht verbogener Stellung des Rohres und
- Fig. 5: in einem Detailausschnitt in schematischer Darstellung die äußere und die innere Rohrwand des erfindungsgemäßen Rohres in verbogener Stellung des Rohres.

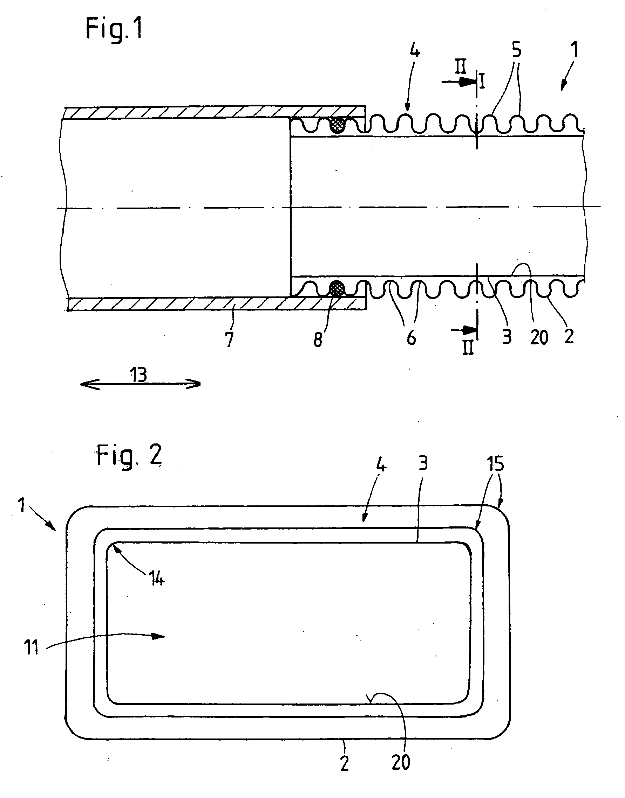

Fig. 1 zeigt das erfindungsgemäße Rohr 1 in einer schematischen, geschnittenen Seitenansicht. Das Rohr 1 ist doppelwandig ausgebildet und verfügt über eine nach Art einer Ziehharmonika gewellt ausgebildete äußere Rohrwand 2, wobei sich Wellenberge 5 und Wellentäler 6 einander in Längsrichtung 13 des Rohres 1 abwechseln. Infolge dieser Ausgestaltung ist die Außenoberfläche 4 der äußeren Rohrwand 2 in Längsrichtung 13 des Rohres 1 wellenförmig ausgestaltet. Innenseitig ist die äußere Rohrwand 2 mit einer inneren Rohrwand 3 verbunden. An den Berührungspunkten zwischen äußerer Rohrwand 2 und innerer Rohrwand 3 kann die innere Rohrwand 3 mit der äußeren Rohrwand 2 verklebt, verschweißt oder sonst wie verbunden sein. Die Innenoberfläche 20 der inneren Rohrwand 3 ist im wesentlichen glatt ausgebildet, was eine leicht gewellte Struktur der Innenoberfläche 20 der inneren Rohrwand 3 mit einschließt, wie im weiteren noch ausgeführt werden wird.

Im gezeigten Ausführungsbeispiel nach Fig. 1 ist das Rohr 1 als Luftführungskanal verwendet und in eine Muffe 7 eingeführt, wobei im Überdeckungsbereich 12 zwischen Muffe 7 und Rohr 1 ein O-Ring 8 angeordnet ist, der die Innenoberfläche der Muffe 7 gegenüber der Außenoberfläche 4 des Rohres 1 abdichtet. Dabei ist der O-Ring 8, wie Fig. 1 erkennen läßt, lagesicher innerhalb eines Wellentals 6 der wellenförmig ausgebildeten Außenoberfläche 4 des Rohres 1 angeordnet.

Die Rohrwand 2 besteht aus einem biegeelastischen Material, vorzugsweise einem thermoplastischen Kunststoff. Die Außenabmessungen 10 des Rohres 1 sind vorzugsweise geringfügig größer ausgebildet als die Innenabmessungen 9 der Muffe 7. Die aus biegeelastischem Material bestehende Rohrwand 2 kann sich infolge dieser Ausgestaltung federelastisch gegenüber der Muffe 7 abstützen, was einen sicheren Sitz des Rohres 1 innerhalb der Muffe 7 gewährleistet.

Die Querschnittsdarstellung nach Fig. 2 läßt erkennen, daß das Rohr 1 einen im wesentlichen rechteckförmigen Strömungsquerschnitt 11 aufweist. Dabei kann anstelle eines im wesentlichen rechteckförmigen Strömungsquerschnitts 11 auch ein ovaler Strömungsquerschnitt 11 gewählt werden. Wie die Querschnittsdarstellung nach Fig. 2 des weiteren erkennen läßt, sind sowohl die Innenoberfläche 20 als auch die Außenoberfläche 4 des Rohres 1 im Übergangsbereich zwischen den Seitenwandungen mit Rundungen 14 bzw. 15 versehen.

Das Rohr 1 weist mit Blick auf seine Außenabmessungen die Höhe 16 und die Breite 17 auf. Der freie Strömungsquerschnitt 11 ist durch die innere Höhe 18 und die innere Breite 19 bestimmt.

Im Vergleich zu einem im Querschnitt kreisförmig ausgebildeten Rohr ermöglicht es die im Querschnitt rechteckförmige Ausgestaltung des erfindungsgemäßen Rohres 1 bei gleich großem Strömungsquerschnitt 11 deutlich verringerte Außenabmessungen entweder in Bezug auf die äußere Höhe 16 oder die äußere Breite 17 vorzusehen. Damit kann ein erfindungsgemäßes Rohr 1 bei gleich großem Strömungsquerschnitt 11 entweder weniger breit oder weniger hoch als ein im Querschnitt kreisförmig ausgebildetes Rohr ausgestaltet sein, was es ermöglicht, das erfindungsgemäße Rohr 1 auch in knapp bemessene Verlegungsräume einzubringen, was mit aus dem Stand der Technik bekannten, im Querschnitt kreisförmig ausgestalteten Rohren nicht möglich ist.

Die im wesentlichen glatt ausgebildete Innenoberfläche 20 der Rohrwand 3 gestattet es, das erfindungsgemäße Rohr 1 als Durchströmungsrohr für gasförmige, flüssige oder feinkörnige Medien zu verwenden. Die glatte Innenoberfläche 20 ermöglicht einen druckverlustarmen Medientransport und verhindert die Entstehung ungewünschter Turbulenzen. Ungewollte Schmutzablagerungen können weitestgehend vermieden werden und eine Reinigung der Innenwand ist mit einer auf einer flexiblen Rute montierten Bürste in einfacher Weise möglich. Darüber hinaus eignet sich das erfindungsgemäße Rohr 1 auch für die Verlegung von elektrischen Kabeln und dergleichen, und zwar sowohl im Innen- als auch im Außenbereich. Die innere Rohrwand 3 und/oder die äußere Rohrwand 2 bestehen vorzugsweise aus einem thermoelastischen Kunststoff und sind mithin wasserdicht und korrosionsbeständig. Das erfindungsgemäße Rohr 1 kann daher auch im Erdreich verlegt werden.

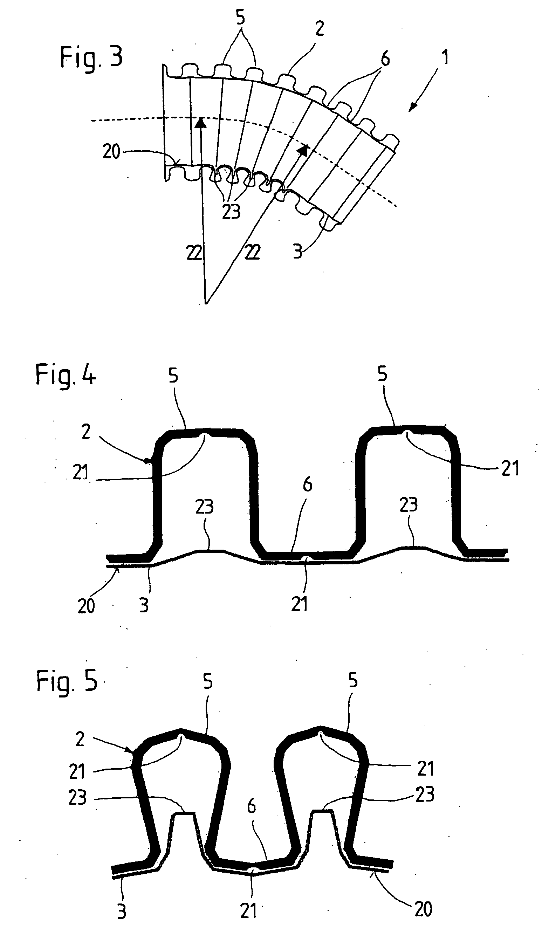

Fig. 3 zeigt in schematischer Seitenansicht das erfindungsgemäße Rohr in leicht verbogener Ausrichtung, wobei die Bezugsziffer 22 den Biegeradius bezeichnet. Wie zu erkennen ist, wird die Verbiegung des Rohres 1 dadurch ermöglicht, daß sich die mit Bezug auf die Blattebene nach Fig. 3 obere Rohrwand 2 streckt, wohingegen sich die mit Bezug auf die Blattebene nach Fig. 3 untere Rohrwand 2 nach Art einer Ziehharmonika zusammenfaltet. Die Innenoberfläche 20 der inneren Rohrwand 3 ist im wesentlichen glatt ausgebildet, wobei diese glatte Ausbildung mit einschließt, daß auch die innere Rohrwand 3 leicht gewellt ausgebildet ist, d. h. über sich in Längsrichtung des Rohres 1 ausgebildete Wellentäler und Wellenberge 23 verfügt. Diese leicht gewellte Ausgestaltung der inneren Rohrwand 3 ist erforderlich, damit eine Verbiegung des Rohres 1 durch die innere Rohrwand 3 nicht verhindert wird. Dabei ist die wellenförmige Ausgestaltung der inneren Rohrwand 3 so zu wählen, daß die Innenoberfläche 20 der inneren Rohrwand 3 möglichst glatt ist, zugleich aber auch eine Verbiegung des Rohres 1 ermöglicht ist, wie in Fig. 3 dargestellt.

Um die Biegefestigkeit des Rohres 1 zu verbessern, ist vorgesehen, daß die Wellenberge 23 der inneren Rohrwand 3 derart ausgestaltet sind, daß sie in die Wellenberge 5 der äußeren Rohrwand 2 hineinragen, wie in Fig. 3 dargestellt. Ungewünschte Verwerfungen der inneren Rohrwand 3 können so bei einem Verbiegen des Rohres 1 vermieden werden.

Die Fig. 4 und 5 zeigen in schematischer Detailansicht die aus innerer und äußerer Rohrwand 2 bestehende Rohrwand des erfindungsgemäßen Rohres 1, wobei Fig. 4 eine gestreckte Stellung des Rohres 1 und Fig. 5 eine verbogene Stellung des Rohres 1 zeigt.

Wie insbesondere Fig. 4 erkennen läßt, verfügt die innere Rohrwand 3 über eine leicht gewellte Struktur, wobei die Innenoberfläche 20 der inneren Rohrwand 3 im wesentlichen glatt ausgebildet ist, d. h. die von der inneren Rohrwand 3 ausgebildeten Wellenberge 23 sehr viel kleiner ausgestaltet sind als die Wellenberge 5 der äußeren Rohrwand 2. lm gestreckten Zustand des Rohres 1, welche in Fig. 4 gezeigt ist, ragen die Wellenberge 23 der inneren Rohrwand 3 leicht in die Wellenberge 5 der äußeren Rohrwand 2 hinein. Durch diese Ausgestaltung wird sichergestellt, daß bei einem Verbiegen des Rohres 1 die sich dabei vergrößernden Wellenberge 23 der inneren Rohrwand 3 weiter in die Wellenberge 5 der äußeren Rohrwand 2 erstrecken, wie in Fig. 5 dargestellt, wodurch verhindert ist, daß sich die innere Rohrwand 3 bei einem Verbiegen des Rohres 1 in unerwünschter Weise verwirft.

Den Fig. 4 und 5 kann des weiteren entnommen werden, daß die äußere Rohrwand 2 mit Bezug auf den Rohrquerschnitt umlaufende Rillen 21 trägt. Dabei sind die Rillen 21 im Bereich eines jeden Wellenberges 5 und/oder eines jeden Wellentals 6 in der äußeren Rohrwand ausgebildet. Die Rillen 21 reduzieren dabei die Wandstärke der äußeren Rohrwand 2 um 20 bis 80 %, vorzugsweise um 40 bis 60 %. Durch diese Rillen 21 werden Sollbiegestellen bereitgestellt, die es ermöglichen, das Rohr 1 wunschgemäß zu verbiegen. Dabei verringern die Rillen 21 den Widerstand der äußeren Rohrwand 2 gegen eine Verkürzung, wie sie für die Rohrwand 2 auf der Bogeninnenseite (vgl. Fig. 3) notwendig ist.

Zur Herstellung eines Rohres 1 der vorbeschriebenen Art dient vorzugsweise ein Verfahren, bei dem ein doppelwandiges, in seiner Ausgangsform im Querschnitt zunächst noch kreisförmiges Rohr erwärmt und in die gewünschte, von der Kreisform abweichende Querschnittsform, die vorzugsweise rechteckförmig oder oval ist, verformt wird. Auf diese Weise entsteht ein Rohr 1 der vorbeschriebenen Art, das heißt ein Rohr 1 mit einem rechteckförmigen oder ovalen Strömungsquerschnitt 11.

Das doppelwandige und in seiner Ausgangsform im Querschnitt zunächst noch kreisförmige Rohr 1 besteht - wie vorstehend erläutert - aus einer äußeren Rohrwand 2 und einer inneren Rohrwand 3. Dabei sind die äußere Rohrwand 2 und die innere Rohrwand 3 vorzugsweise miteinander verbunden. Das in dieser Ausgangsform vorliegende Rohr 1 wird anschließend unter Wärmezufuhr mittels eines Preßwerkzeuges verformt, infolgedessen ein Rohr mit einer von der Kreisform abweichenden Querschnittsform entsteht.

Die vorstehenden Ausführungen dienen ausschließlich der näheren Erläuterung der Erfindung und wirken insofern nicht beschränkend. Die in den Fign. gezeigten Ausführungsbeispiele sind nicht maßstabsgetreu dargestellt.

### Bezugszeichenliste

- 1: Rohr
- 2: äußere Rohrwand
- 3: innere Rohrwand
- 4: Außenoberfläche
- 5: Wellenberg (äußere Rohrwand)
- 6: Wellental
- 7: Muffe
- 8: O-Ring
- 9: Innenabmessungen
- 10: Außenabmessungen
- 11: Strömungsquerschnitt
- 12: Überdeckungsbereich
- 13: Längsrichtung
- 14: Rundung
- 15: Rundung
- 16: Höhe, außen
- 17: Breite, außen
- 18: Höhe, innen
- 19: Breite, innen
- 20: Innenoberfläche
- 21: Rillen
- 22: Biegeradius
- 23: Wellenberg (innere Rohrwand)

## Patentansprüche

1. Rohr, insbesondere für die Luftführung in Be- und/oder Entlüftungseinrichtungen von Gebäuden oder Teilen hiervon, mit einem im wesentlichen rechteckförmigen oder ovalen Strömungsquerschnitt (11), das eine nach Art einer Ziehharmonika gewellt ausgebildete äußere Rohrwand (2) mit Wellentälern (6) und Wellenbergen (5) aufweist, **gekennzeichnet durch** eine mit der äußeren Rohrwand (2) verbundene innere Rohrwand (3), wobei die Innenoberfläche (20) der inneren Rohrwand (3) im wesentlichen glatt ausgebildet ist, wobei diese im wesentlichen glatte Ausbildung mit einschließt, dass auch die innere Rohrwand leicht gewellt ausgebildet ist und über Wellentäler und Wellenberge (23) verfügt, wobei die Wellenberge (23) der inneren Rohrwand (3) in die Wellenberge (5) der äußeren Rohrwand (2) hineinragen.

2. Rohr nach Anspruch 1, **dadurch gekennzeichnet, daß** die äußere Rohrwand (2) mit Bezug auf den Rohrquerschnitt umlaufende Rillen (21) aufweist.

3. Rohr nach Anspruch 2, **dadurch gekennzeichnet, daß** im Bereich eines jeden Wellenberges (5) und/oder eines jeden Wellentals (6) jeweils eine umlaufende Rille (21) ausgebildet ist.

4. Rohr nach Anspruch 2 oder 3, **dadurch gekennzeichnet, daß** die Wandstärke der äußeren Rohrwand (2) im Bereich der umlaufenden Rillen (21) um 20 % bis 80 %, vorzugsweise 40 % bis 60 % reduziert ist.

## Claims

1. A pipe, more preferably for the conductance of air in inward and/or outward ventilation devices of buildings or parts thereof, with a substantially rectangular or oval flow cross section (11), comprising an outer pipe wall (2) formed corrugated according to the type of an accordion with wave valleys (6) and wave mountains (5), **characterized by** an inner pipe wall (3) joined with the outer pipe wall (2) wherein the inner surface (20) of the inner pipe wall (3) is substantially formed smooth, wherein this substantially smooth embodiment includes that the inner pipe wall is also embodied in a slightly wavy manner and has wave valleys and wave mountains (23), wherein the wave mountains (23) of the inner pipe wall (3) protrude into the wave mountains (5) of the outer pipe wall (2).

2. The pipe according to Claim 1, **characterized in that** the outer pipe wall (2) comprises circumferential grooves (21) with reference to the pipe cross section.

3. The pipe according to Claim 2, **characterized in that** in the region of each wave mountain (5) and/or of each wave valley (6) a circumferential groove (21) is formed.

4. The pipe according to Claim 2 or 3, **characterized in that** the wall thickness of the outer pipe wall (2) in the region of the circumferential grooves (21) is reduced by 20 to 80%, preferentially 40 to 60%.

## Revendications

1. Tuyau, en particulier pour le guidage de l'air dans des dispositifs d'aération et/ou de purge de bâtiments ou de parties de bâtiment, avec une section d'écoulement (11) sensiblement rectangulaire ou ovale, qui présente une paroi de tuyau (2) extérieure conçue ondulée à la façon d'un accordéon avec des creux d'ondulation (6) et des sommets d'ondulation (5), **caractérisé par** une paroi de tuyau (3) intérieure reliée à la paroi de tuyau (2) extérieure, la surface intérieure (20) de la paroi de tuyau (3) intérieure étant conçue sensiblement lisse, cette conception sensiblement lisse incluant aussi le fait qu'également la paroi de tuyau intérieure est conçue légèrement ondulée et dispose de creux d'ondulation et de sommets d'ondulation (23), les sommets d'ondulation (23) de la paroi de tuyau (3) intérieure dépassant dans les sommets d'ondulation (5) de la paroi de tuyau (2) extérieure.

2. Tuyau selon la revendication 1, **caractérisé en ce que** la paroi de tuyau (2) extérieure présente des rainures (21) périphériques par rapport à la section de tuyau.

3. Tuyau selon la revendication 2, **caractérisé en ce qu'**à chaque fois une rainure (21) périphérique est formée dans la zone de chaque sommet d'ondulation (5) et/ou de chaque creux d'ondulation (6).

4. Tuyau selon la revendication 2 ou 3, **caractérisé en ce que** l'épaisseur de paroi de la paroi de tuyau (2) extérieure est réduite de 20 % à 80 %, de préférence de 40 % à 60 %, dans la zone des rainures (21) périphériques.
